# EUROPÄISCHE PATENTSCHRIFT

(11) **EP 2 432 312 B1**
(45) Veröffentlichungstag und Bekanntmachung des Hinweises auf die Patenterteilung: **03.07.2013**
(21) Anmeldenummer: 10726920.1
(22) Anmeldetag: 20.05.2010
(51) Int. Cl.: A01K 31/12, A01K 15/02

(54) **VERWENDUNG EINER SITZSTANGE FÜR VÖGEL ZUR ERMÖGLICHUNG EINES GEPOLSTERTEN STEHENS, SITZENS ODER GREIFENS**
USE OF A PERCH FOR BIRDS FOR PROVIDING CUSHIONED STANDING, SITTING, OR GRIPPING
UTILISATION D'UN DISPOSITIF TEL QU'UN PERCHOIR POUR OISEAU PERMETTANT STATION DEBOUT, L'ASSISE OU L'AGRIPPAGE AMORTIS.

(30) Priorität: 20.05.2009 DE 102009022204; 12.06.2009 DE 102009024708
(43) Veröffentlichungstag der Anmeldung: 28.03.2012
(73) Patentinhaber: Marketing Partners Management GmbH, 14129 Berlin (DE)
(72) Erfinder: KOEHN, Matthias-Reinhard, 14129 Berlin (DE); SCHRADER, Lars, 29223 Celle (DE); SCHOLZ, Britta, 30169 Hannover (DE)
(74) Vertreter: Sokolowski, Fabian
(86) Internationale Anmeldenummer: PCT/EP2010/056965
(87) Internationale Veröffentlichungsnummer: WO 2010/133667

(56) Entgegenhaltungen:
- WO-A2-2006/023533
- CH-A- 136 871
- DE-U1- 29 603 988
- JP-A- 8 020 055
- JP-A- 8 170 415
- JP-A- 2005 213 959
- US-A- 5 048 892
- US-A- 5 134 730
- US-A- 5 690 389
- US-B2- 6 966 275

## Beschreibung

Die vodiegende Erfindung betrifft eine Verwendung einer Vorrichtung zur Ermöglichung eines gepolsterten Stehens, Sitzens oder Greifens gemäß dem Oberbegriff des Anspruchs 1.

Aus dem Stand der Technik bekannte Tritt- und Griffelemente bestehen entweder aus einem Vollmaterial oder aus Rohrmodulen mit verschiedenen Weichheitsgraden. Sie werden regelmäßig in der Form von Platten oder Stangen angeboten und können äußerst preiswert produziert werden. Bei langem Stehen, Liegen, Sitzen oder Laufen auf diesen flächigen Platten oder längserstreckten Stangen bzw. bei einem starken Zug auf einen derart ausgestalteten Griff kann es durch die harte und unergonomische Oberfläche zu erheblichen körperlichen Belastungen und gegebenenfalls Verletzungen kommen.

Auch bei aus dem Stand der Technik bekannten Stangen, die als Sitzstangen für Vögel eingesetzt werden, kann es zu vergleichbaren Schädigungen kommen, da die Vögel insbesondere in Käfighaltung aber auch in alternativen Haltungsformen sehr viel Zeit auf einer entsprechenden Sitzstange verbringen. Hierdurch werden insbesondere Hautentzündungen und Knochenbrüche bei den Vögeln hervorgerufen.

Aus dem Stand der Technik sind ferner an eine entsprechende Arbeitsergonomie angepasste geschäumte Matten bekannt, durch die das längere Stehen während eines Arbeitsvorganges erleichtert werden soll. Allerdings ist dabei das Anpassen der Matten an das Gewicht des Anwenders und an verschiedene Geometrien für unterschiedliche Einsetzzwecke nur sehr eingeschränkt möglich. Um ein erleichtertes Stehen oder Gehen zu ermöglichen, sind weiterhin sehr weiche Teppichböden bekannt, die geeignet sind, Druck abzufedem. Allerdings sind dicke und weiche Böden nicht überall sinnvoll einsetzbar.

Aus dem Stand der Technik sind auch Liegematten für Rinder bekannt, bei denen eine Liegefläche an ihrer Unterseite mit im 45°-Winkel angeordneten Lamellen versehen ist, die eine polsternde bzw. dämpfende Wirkung vermitteln. Allerdings sind diese Lamellen nach unten offen und nicht mit einer Trägerplatte verbunden, was die Haltbarkeit, Hygiene und die Stabilität der gesamten Matte beeinträchtigt.

Ferner sind aus dem Stand der Technik Luftmatratzen bekannt, die aufgrund ihrer spezifischen Ausgestaltung jedoch nicht für dauerhafte und starke Belastungen ausgelegt sind.

Aus dem Stand der Technik sind darüber hinaus Griffe mit geschäumten Ummantelungen bekannt. Derartige Ummantelungselemente sind in der Regel jedoch zu weich und nicht stabil genug, um gezielt Druck zu entlasten. Außerdem ist auch die Verwendung von Integralschäumen bekannt, die auf der anderen Seite jedoch nicht weich genug sind, um eine dauerhaft angenehme Anwendung zu ermöglichen. Vielmehr verschaffen Integralschäume nur ein annäherndes Gefühl von Polsterung. Um insbesondere im Hinblick auf Griffelemente ein ergonomisches Arbeiten zu ermöglichen, werden heutzutage daher verbreitet Handschuhe im Arbeitsalltag getragen, die die Nachteile der bislang bekannten Griffelemente ausgleichen sollen.

Weitere Beispiele sind aus Patent dokumenten JP 8 170 415 A, JP 8 020 055 A, JP 2005 213 959 A, US 5 048 892 A, US 5 134 730 A, US 6 966 275 B2, US 5 690 389 A bekannt.

Der vorliegenden Erfindung liegt die Aufgabe zugrunde, eine Verwendung einer Vorrichtung zur Ermöglichung eines gepolsterten Stehens, Sitzes oder Greifens bereitzustellen, die die zuvor beschriebenen Nachteile überwindet und einfach herzustellen ist.

Eine derartige Vorrichtung, die auch zur Ermöglichung eines gepolsterten Liegens oder Laufens bzw. anderer vergleichbarer Tätigkeiten geeignet ist, weist ein Trägerelement und ein an dem Trägerelement angeordnetes Auflageelement auf. Das Auflageelement umgibt das Trägerelement dabei zumindest teilweise. Ferner ist das Auflageelement dazu vorgesehen und eingerichtet, sich durch eine Druckeinwirkung eines Anwenders auf eine Oberfläche des Auflageelementes elastisch zu verformen. Das heißt, das Auflageelement passt sich dem Druck, Druckprofil und der Anatomie des Anwenders an, welcher Druck auf das Auflageelement ausübt. Das Besondere an der Vorrichtung ist, dass zwischen dem Trägerelement und dem Auflageelement mindestens ein Hohlraum ausgebildet ist, der mit einem Gas gefüllt ist. Dieser Hohlraum bzw. das in diesem Hohlraum enthaltene Gas wirkt als Polsterelement für die Vorrichtung und gleicht auf die Vorrichtung ausgeübten Druck federnd aus. Durch diese Ausgestaltung der Vorrichtung ist es möglich, dass ein Anwender deutlich komfortabler auf der Vorrichtung im Vergleich zu aus dem Stand der Technik bekannten Vorrichtungen steht oder sitzt bzw. dass ein Anwender eine Vorrichtung wesentlich angenehmer greifen kann als dies bei ungefederten Griffen der Fall ist. Die Gesundheit des Anwenders wird dabei erheblich geschont. Darüber hinaus wird eine Unfallgefahr bei Kollisionen mit einer entsprechenden Vorrichtung, zum Beispiel beim Fallen auf eine entsprechende Vorrichtung, oder beim Anstoßen gegen eine entsprechende Vorrichtung, signifikant verringert.

Das Auflageelement der Vorrichtung kann auch als Auflageeinheit bezeichnet werden. Ferner kann die Vorrichtung als solche, je nach ihrer konkreten Ausgestaltung und ihrem Einsatzzweck, als Tritt- und Griffpaneel oder als Sitzstange bezeichnet werden. Insbesondere in Gestalt eines flächigen oder längserstreckten Boden- bzw. Griffpaneels ermöglicht die Vorrichtung die ergonomische Anpassung an das Gewicht und/oder den Zug eines Anwenders bzw. an auf sie durch einen Anwender einwirkende Punktlasten.

Das Gas, welches in dem mindestens einen Hohlraum enthalten ist, kann jedes beliebige Gas, beispielsweise Luft, sein. Als Hohlraum im Sinne dieser Erfindung werden insbesondere makroskopisch sichtbare Kammern verstanden und keine Poren wie sie beispielsweise in Schäumen gebildet sind.

In einer Variante ist das Auflageelement als separate Einheit ausgestaltet, so dass es von dem Trägerelement abgenommen werden kann bzw. auf ein Trägerelement aufgebracht werden kann. In dieser Variante lassen sich bereits vorhandene Trägerelemente durch ein Auflageelement nachträglich ausrüsten und hinsichtlich ihrer Polstereigenschaften verbessern. Auf diese Art und Weise kann also eine Umrüstung von bereits vorhandenen Vorrichtungen wie beispielsweise Stangen erfolgen. Mit wenigen Handgriffen können so beispielsweise Sitzstangen mit neuen Oberflächenstrukturen, Durchmessern und Härtegraden gemäß den jeweiligen Anforderungen ausgestattet werden. Auch andere, nicht stangenförmige Tritt- und Griffelemente können auf diese Weise leicht nachgerüstet werden. Das Auflageelement kann dabei mit dem entsprechenden Trägerelement unter Ausbildung einer dauerhaften oder auch nur zeitweisen Verbindung verbunden werden. Eine derartige Verbindung kann beispielsweise durch eine Klebe-, Klett-, Stift- oder eine magnetische Verbindung ausgestaltet werden.

In einer weiteren Variante hat das Auflageelement eine derart auf das Trägerelement abgestimmte Form, dass es mindestens 50 Prozent der Oberfläche des Trägerelementes überdeckt. Dabei ist unter "Oberfläche des Trägerelementes" insbesondere eine gedachte geschlossene Oberfläche zu verstehen, auch wenn das Trägerelement aus einem schaumartigen Material bestehen sollte. In diesem Fall würden also die Poren des Schaums nicht zur Oberfläche beitragen. Vielmehr würde die Oberfläche nur der Fläche entsprechen, die ein glattes Material, welches das Schaummaterial überdeckt, einnehmen würde.

In einer weiteren Variante ist das Auflageelement derart ausgestaltet, dass es die obere und die seitlichen Oberflächen des Trägerelementes vollständig überdeckt. In diesem Fall würde also lediglich eine untere Oberfläche des Trägerelementes nicht vom Auflageelement überdeckt werden. Auf diese Weise lässt sich Druck, der von oben oder von den Seiten auf das Trägerelement ausgeübt wird, durch das Auflageelement bzw. den zwischen dem Auflageelement und dem Trägerelement gebildeten Hohlraum besonders vorteilhaft abfedern. Wenn auch eine Abfederung eines möglicherweise auf das Trägerelement von unten einwirkenden Kraft gewünscht wird, kann das Auflageelement natürlich auch derart ausgestaltet werden, dass es das Trägerelement vollständig umschließt bzw. umgreift. Häufig wird Druck auf ein Trägerelement jedoch nicht von allen Seiten gleichermaßen ausgeübt, so dass sich Material und Kosten sparen lassen, wenn eine Seite des Trägerelementes, wie beispielsweise die Unterseite, auf der regelmäßig keine Druckbelastung erwartet wird, nicht mit einem Auflageelement versehen ist.

In einer Variante sind das Trägerelement und/oder das Auflageelement aus einem Kunststoff hergestellt. Dabei kann es sich um den gleichen Kunststoff für beide Elemente oder aber um unterschiedliche Kunststoffe handeln. Ferner ist es denkbar, dass eines der beiden Elemente aus einem Kunststoff und das andere Element aus einem vollkommen anderen Material hergestellt ist. Für das Auflageelement eignen sich die unterschiedlichsten Materialbeschaffenheiten; in einer Variante sind lediglich stoff- oder textilartige Beschaffenheiten von den möglichen Materialbeschaffenheiten ausgenommen.

Das Trägerelement kann beispielsweise in kompakter Weise ohne Hohlräume ausgestaltet sein oder beispielsweise als Rohr, welches in seinem Inneren einen Hohlraum aufweist. Grundsätzlich sollte das Trägerelement derart ausgestaltet sein, dass es eine hohe Stabilität aufweist, da das Auflageelement nicht wesentlich zur Stabilität der gesamten Vorrichtung beiträgt, sondern vielmehr deren polsternde bzw. federnde Eigenschaften vermittelt. Das Trägerelement kann also aus einem Kunststoff mit höherer Festigkeit als das Auflageelement hergestellt sein. Wird der gleiche Kunststoff als Material für beide Elemente eingesetzt, kann sich eine höhere Stabilität bzw. Festigkeit des Trägerelementes auch dadurch ergeben, dass auf das Vorsehen von Hohlräumen im Trägerelement verzichtet wird bzw. dass das Trägerelement mit einer größeren Wandstärke als das Auflageelement hergestellt wird. Hier stehen dem Fachmann grundsätzlich alle möglichen bekannten Gestaltungsmöglichkeiten offen, mittels derer er das Trägerelement mit stabilitätsvermittelnden Eigenschaften und das Auflageelement mit eher polsternden oder federnden Eigenschaften ausgestalten kann.

In einer weiteren Variante sind das Trägerelement und/oder das Auflageelement aus einem Material hergestellt, das ein Elastizitätsmodul von ≤ 1 GPa, insbesondere ≤ 0,1 GPa und ganz besonders ≤ 0,01 GPa bzw. ≤ 0,001 GPa aufweist. Eine geeignete Obergrenze des Elastizitätsmoduls ist auch 0,9 GPa. Der Elastizitätsmodul wird dabei jeweils gemäß DIN 53 457 bestimmt. Beispiele für Materialien mit einem entsprechenden Elastizitätsmodul sind beispielsweise Polyethylen (PE), Polyvinylchlorid (PVC), Gummi und gummiartige Elastomere, Polyurethanschaum und andere Schäume.

In einer weiteren Variante sind das Trägerelement und/oder das Auflageelement nicht aus einem schaumartigen Material hergestellt. Bevorzugte Materialien sind insbesondere solche mit einer im Wesentlichen geschlossenen Oberfläche. Dadurch werden die hygienischen Eigenschaften der Vorrichtung verbessert, da eine Reinigung der Vorrichtung erleichtert wird und sich Keime nicht so leicht auf der Vorrichtung festsetzen können.

In einer weiteren Variante weist das Auflageelement zumindest ein Stabilisatorelement auf, das auf derjenigen Seite des Auflageelementes ausgebildet ist, die zum Trägerelement hin orientiert ist. Das Stabilisatorelement kann dabei beispielsweise das Auflageelement mit dem Trägerelement verbinden oder aber nur zwei Punkte des Auflageelementes miteinander. Auf diese Weise kann ein zwischen dem Auflageelement und dem Trägerelement gebildeter Hohlraum durch das Stabilisatorelement unterteilt werden. Durch das Vorsehen einer Vielzahl von Stabilisatorelementen ist es auf diese Weise möglich, zahlreiche Kammern zwischen dem Auflageelement und dem Trägerelement auszubilden, die hinsichtlich ihrer Größe und der damit verbundenen unterschiedlichen Polstereigenschaften an den konkreten Einsatzzweck der Vorrichtung angepasst werden sollen. So sind kleine Kammern aufgrund der größeren Materialmenge, die sich um den verhältnismäßig kleinen Kammerraum erstreckt eher für eine härtere Polsterung geeignet als dies bei großen Kammern der Fall ist. Es ist also möglich, die polsternden Eigenschaften der Vorrichtung in unterschiedlicher Weise über die gesamte Oberfläche der Vorrichtung hin anzupassen. Das Stabilisatorelement kann aber auch in stiftförmiger Weise ausgebildet sein, ohne den Hohlraum in kleinere Kammern zu unterteilen.

In einer weiteren Variante ist das Stabilisatorelement federnd ausgestaltet und/oder kann einen Druck oder einen Zug auf denjenigen Bereich des Auflageelementes ausüben, mit dem es fest verbunden ist. Durch eine derartige Ausgestaltung des Stabilisatorelementes lassen sich zusätzliche federnde bzw. polsternde Eigenschaften der Vorrichtung vermitteln. Die polsternden Eigenschaften des in den mindestens einen Hohlraum eingeschlossenen Gases lassen sich auf diese Weise folglich zusätzlich unterstützen.

In einer weiteren Variante weisen das Trägerelement und/oder das Auflageelement zumindest teilweise antimikrobielle Eigenschaften auf. Darüber hinaus können das Trägerelement und /oder das Auflageelement zumindest teilweise mit einer schmutzabweisenden und/oder einer feuchtigkeitsabweisenden Beschichtung versehen sein. Die Ausstattung der Elemente mit antimikrobiellen oder schmutz- bzw. feuchtigkeitsabweisenden Funktionen führt zu einer deutlichen Verbesserung des Hygienestatus der Vorrichtung. In der Nutztierhaltung und für die weiteren Verarbeitungsschritte in der Lebensmittelproduktion können auf diese Weise bei aus dem Stand der Technik bekannten Vorrichtungen auftretende Hygieneprobleme vermieden werden.

Die antimikrobiellen Eigenschaften lassen sich beispielsweise durch das Einbringen von ionenemittierenden Metallverbindungen wie etwa Sterionen in einer geeigneten Form in das Material, aus dem das Trägerelement und/oder das Auflageelement bestehen, erreichen.

In einer weiteren Variante weisen das Trägerelement und/oder das Auflageelement zumindest teilweise Aroma- bzw. Geruchsstoffe und/oder Farbstoffe auf, die von dem jeweiligen Anwender wahrgenommen werden können. Auf diese Weise erhöht sich ein positiver Einfluss auf die Psyche des Nutzers. Auch kann auf diese Art und Weise eine erhöhte Akzeptanz der Vorrichtung durch einen entsprechenden Anwender erreicht werden.

In einer weiteren Variante weisen das Trägerelement und das Auflageelement eine längserstreckte Form auf, beispielsweise in Gestalt eines Rohres, wobei das Auflageelement zusätzlich mit mindestens einem Abschlusselement versehen ist. Dieses Abschlusselement befindet sich dabei an einem der beiden sich in Längserstreckungsrichtung einander gegenüberliegenden Enden des Auflageelementes. Vorzugsweise werden zwei im Wesentlichen gleich ausgestaltete Abschlusselemente an den jeweiligen Endes des Auflageelementes eingesetzt. Das Abschlusselement weist eine im Längsschnitt durch das montierte Abschlusselement entlang der Längserstreckungsrichtung der Vorrichtung U-förmige Gestalt auf und ist dazu vorgesehen und eingerichtet, den Kontakt von Schädlingen mit dem Auflageelement außerhalb des Abschlusselementes zu verhindern. Das Vorsehen eines derartigen Abschlusselementes ist insbesondere dann sinnvoll, wenn die Vorrichtung in einem Bereich eingesetzt werden soll, in dem beispielsweise Milben, Flöhe oder Wanzen als Schädlinge auftreten. Wenn die Schädlinge versuchen, auf die Vorrichtung von ihren Seiten her zu gelangen, geraten sie zunächst in das U-förmig ausgestaltete Abschlusselement, das das Ende der Vorrichtung wie eine Rinne oder einen Kranz umgibt (genau genommen weist das Abschlusselement im Längsschnitt also die Gestalt zweier Us auf, die voneinander beabstandet angeordnet sind). Den Schädlingen gelingt es dabei nicht, das nach außen geöffnete U des Abschlusselementes zu überwinden oder in einer anderen Richtung als nach außen zu verlassen. Auf diese Weise lässt sich verhältnismäßig einfach verhindern, dass Milben, Flöhe, Wanzen oder andere Schädlinge auf die Vorrichtung gelangen können. Für einen besonders effektiven Schutz vor Schädlingen ist es sinnvoll, wenn entsprechende Abschlusselemente an beiden Seiten des Auflageelementes vorgesehen sind.

Das Abschlusselement kann statt einer U-förmigen Gestalt auch die Gestalt eines nach außen hin geöffneten C oder jede andere vergleichbare Gestalt aufweisen, die geeignet ist, Schädlinge vom Erklimmen der Vorrichtung abzuhalten.

Das Abschlusselement kann als separates Teil geformt und mit dem Auflageelement verbunden sein. Es kann aber auch zusammen mit dem Auflageelement geformt werden und zusammen mit diesem ein einstückiges Element bilden. Dann läge ein Auflageelement mit integralem Abschlusselement vor.

In einer weiteren Variante weist das Auflageelement an seiner Seite, die im montierten Zustand dem Trägerelement zugewandt ist, eine größere Festigkeit auf, als an der Seite, die im montierten Zustand dem Trägerelement abgewandt ist. Dies ist insbesondere dann sinnvoll, wenn das Auflageelement als separate Einheit ausgebildet wird und zum Nachrüsten eines bereits vorhandenen Trägerelementes gedacht ist. Denn durch die erhöhte Festigkeit auf der dem Trägerelement zugewandten Seite kann eine erleichterte Montage des Auflageelementes auf einem Trägerelement erreicht werden. Die Seite mit der erhöhten Festigkeit des Auflageelementes kann zudem bereits mit Klebeelementen oder anderen Verbindungselementen ausgestattet sein, um eine besonders einfache Montage des Auflageelementes auf einem Trägerelement zu ermöglichen.

In einer weiteren Variante weist die Vorrichtung mindestens ein Kopplungselement auf, das dazu dient, die Vorrichtung mit einer weiteren, im Wesentlichen gleich gestalteten Vorrichtung koppeln zu können. Mit einer derartigen Ausgestaltung ist es also möglich, großflächige Bodenbereiche bzw. sich lang erstreckende Rohre aus einzelnen kleiner dimensionierten Untereinheiten aufzubauen. Dies erleichtert die Montage einer entsprechenden Vorrichtung bzw. das Nachrüsten bereits vorhandener Vorrichtungen erheblich. Das Kopplungselement kann dabei beliebig ausgestaltet sein. Es sind sowohl form- als auch kraftschlüssige Verbindungen denkbar. Beispielsweise kann das Kopplungselement in Form einer Nut-/Federverbindung ausgestaltet sein.

Erfindungsgemäβ ist die Verwendung einer Vorrichtung als Sitzstangen für Vögel. Denn mit einer derart gepolsterten Sitzstange und der damit ermöglichten ergonomischen Anpassung der Sitzstange an das Gewicht und die Punktlasten des jeweiligen Vogels werden Krankheiten wie Brustbeindefekte, Fußballengeschwüre und Läsionen vermieden. Dadurch kann erhebliches Leiden von Vögeln wie beispielsweise Legehennen, die in Käfighaltung gehalten werden, abgewandt werden.

Weitere Eigenschaften und Einzelheiten der vorliegenden Erfindung werden nachstehend anhand von Figuren näher erläutert. Es zeigen:
- Figur 1: einen Querschnitt durch ein erstes Ausführungsbeispiel einer Vorrichtung zur Ermöglichung eines gepolsterten Stehens, Sitzens oder Greifens,
- Figur 2: ein zweites Ausführungsbeispiel einer entsprechenden Vorrichtung,
- Figur 3A: den Querschnitt durch eine als Rohr ausgestaltete Vorrichtung,
- Figur 3B: den Querschnitt durch eine weitere als Rohr ausgestaltete Vorrichtung,
- Figur 3C: den Querschnitt durch eine weitere als Rohr ausgestaltete Vorrichtung,
- Figur 4A: eine teilweise geschnittene seitliche Ansicht eines als Griff ausgestalteten weiteren Ausführungsbeispiels einer Vorrichtung,
- Figur 4B: eine teilweise geschnittene seitliche Ansicht eines ebenfalls als Griff ausgestalteten weiteren Ausführungsbeispiels einer Vorrichtung,
- Figur 5: den Querschnitt durch ein weiteres Ausführungsbeispiel einer entsprechenden Vorrichtung,
- Figur 6: den Querschnitt durch noch ein weiteres Ausführungsbeispiel einer Vorrichtung,
- Figur 7: eine Querschnittsdarstellung des Ausführungsbeispiels der Figur 5 unter Belastung,
- Figur 8: einen Querschnitt durch ein weiteres Ausführungsbeispiel einer entsprechenden Vorrichtung,
- Figuren 9A bis 9C: Querschnitte durch drei weitere Ausführungsbeispiele einer entsprechenden Vorrichtung,
- Figuren 10A bis 10C: Querschnitte durch noch drei weitere Ausführungsbeispiele entsprechender Vorrichtungen,
- Figur 11A: einen Längsschnitt durch ein weiteres Ausführungsbeispiel, bei dem ein Abschlusselement vorgesehen ist, und
- Figur 11B: einen Längsschnitt durch noch ein weiteres Ausführungsbeispiel, bei dem ebenfalls ein Abschlusselement vorgesehen ist.

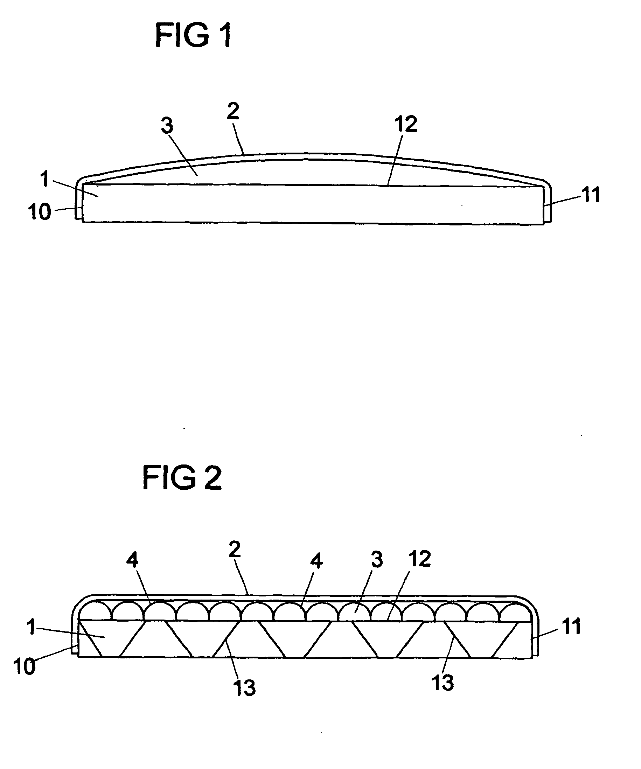

Die Figur 1 zeigt den Querschnitt durch eine Vorrichtung zur Ermöglichung eines gepolsterten Stehens, Sitzens oder Greifens in Form eines flächig ausgestalteten Paneels. Die Vorrichtung weist dabei eine Trägerelement 1 und ein Auflageelement 2 auf, welches die seitlichen Flächen 10 und 11 des Trägerelementes 1 sowie dessen Oberfläche 12 umgibt.

Zwischen dem Auflageelement 2 und dem Trägerelement 1 ist eine Kammer 3 gebildet, die einen mit Gas gefüllten Hohlraum darstellt. Als Gas wird in diesem Ausführungsbeispiel Luft verwendet. Das Auflageelement 2 ist vorliegend als glatte Matte ausgestaltet und um die Außenflächen des Trägerelementes 1 herumgezogen. Die federnden bzw. polsternden Eigenschaften des Auflageelementes 2 können durch die Art und den Druck des in der Kammer 3 befindlichen Gases eingestellt werden. Ferner bestimmen die Eigenschaften des Materials, aus dem das Auflageelement 2 gebildet ist, diese polsternden bzw. federnden Eigenschaften des Auflageelementes 2 mit.

Die Figur 2 zeigt ebenfalls einen Querschnitt durch eine als flächiges Paneel ausgestaltete Vorrichtung zur Ermöglichung eines gepolsterten Stehens, Sitzens oder Greifens. Wiederum ist ein Trägerelement 1 vorgesehen, das im Gegensatz zum Ausführungsbeispiel der Figur 1 jedoch nicht kompakt ausgestaltet ist, sondern mit Hohlkammern versehen ist, die durch einzelne Stege 13 gebildet werden. Das Trägerelement 1 ist also als Hohlkammerprofil ausgestaltet. Dadurch lässt sich ebenfalls eine hohe Stabilität des Trägerelementes 1 erreichen, der Materialaufwand jedoch signifikant reduzieren. Für eine bessere Übersichtlichkeit sind nur einige der Stege 13 mit dem entsprechenden Bezugszeichen versehen.

Die Seiten 10, 11 des Trägerelementes 1 sowie dessen Oberseite 12 sind auch in diesem Fall von einem Auflageelement 2 überdeckt. Zwischen dem Auflageelement 2 und dem Trägerelement 2 sind zahlreiche kleinere Polsterkammern 3 als Hohlräume gebildet. Diese kleineren Polsterkammern 3 sind jeweils mit Luft als Gas gefüllt. Die Unterteilung zwischen den einzelnen Polsterkammern 3 erfolgt durch Stabilisierungselemente 4, welche zwischen dem Auflageelement 2 und dem Trägerelement 1 ausgebildet sind. Mit dieser Ausgestaltung ist es möglich, das Auflageelement 2 vollkommen plan auszugestalten, so dass es mit Dekorfolien oder Furnieren überzogen bzw. veredelt werden kann. Ferner ist es denkbar, dass das Auflageelement mit Teppichfasem versehen bzw. verschönt wird. Das in der Figur 2 dargestellte flächig ausgestaltete Paneel eignet sich dann besonders gut als polsternder Bodenbelag.

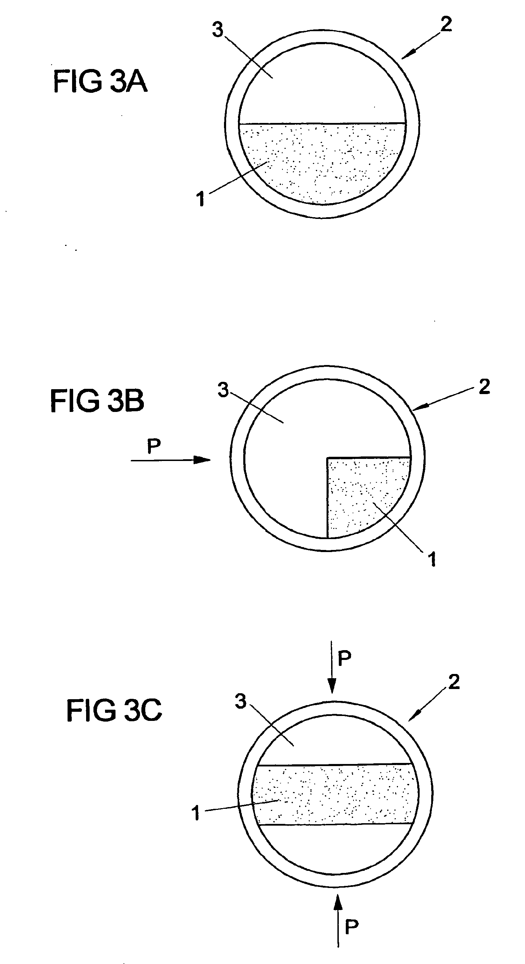

Die Figur 3A zeigt den Querschnitt durch eine als Rohr ausgestaltete Vorrichtung zur Ermöglichung eines gepolsterten Stehens, Sitzens oder Greifens. Wiederum ist ein Trägerelement 1 vorgesehen, das in diesem Ausführungsbeispiel jedoch vollständig von einem Auflageelement 2 umgeben ist. Von außen ist daher nur das Auflageelement 2 zu sehen. Zwischen dem Auflageelement 2 und dem Trägerelement 1 ist wiederum ein Hohlraum 3 gebildet, der mit Luft gefüllt ist. Wenn das Rohr keine seitlichen Verschlusselemente aufweist, ist der Hohlraum 3 zur Atmosphäre hin geöffnet. Dies beeinträchtigt jedoch nicht die polsternden Eigenschaften, die er für die gesamte Vorrichtung vermittelt. Vielmehr kommt es hier lediglich darauf an, dass zumindest abschnittsweise kein direkter Kontakt zwischen dem Auflageelement 2 und dem Trägerelement 1 vorhanden ist, sondern Luft oder anderes Gas als Zwischenmedium zwischen beiden Elementen angeordnet ist.

Die Figur 3B zeigt ein weiteres Ausführungsbeispiel, das sich von dem der Figur 3A nur durch die Gestalt des Trägerelementes 1 unterscheidet. Da das Trägerelement 1 sich im Gegensatz zu dem in der Figur 3A dargestellten Ausführungsbeispiel nicht über die gesamte Breite des Rohres erstreckt, sondern nur über etwa die Hälfte, ergibt sich ein anderes Verhalten des in der Figur 3B dargestellten Rohres gegenüber auf ihn ausgeübten Druck. So wird auch Druck P, welcher von einer dem Trägerelement 1 abgewandten Seite auf die Vorrichtung ausgeübt wird, stärker entlastet, als dies beim Ausführungsbeispiel der Figur 3A der Fall ist. Letztlich lassen sich über die Geometrien des Trägerelementes 1 so die unterschiedlichsten Entlastungen des auf das Rohr ausgeübten Drucks bzw. Zugs in bestimmten Richtungen ermöglichen.

Dies ist ergänzend im Ausführungsbeispiel der Figur 3C dargestellt, die wiederum einen Querschnitt durch eine als Rohr ausgestaltete Vorrichtung wiedergibt. Von den Ausführungsbeispielen der Figur 3A und der Figur 3B unterscheidet sich das Ausführungsbeispiel der Figur 3C wiederum nur in der Gestalt des Trägerelementes 1. Dieses Trägerelement 1 nimmt im Ausführungsbeispiel der Figur 3C zwar die gesamte Breite des Rohres ein, ist jedoch nicht wie bei der Figur 3A in einem unteren Bereich der Vorrichtung angeordnet, sondern in einem mittigen Bereich. Dadurch kann sowohl Druck, der von oben als auch von unten auf das Rohr ausgeübt wird, gezielt entlastet werden. Die im Zusammenhang mit den Figuren 3B und 3C diskutierte Druckausübung ist in diesen Figuren durch entsprechende Pfeile und den Buchstaben P verdeutlicht. Neben den in den Figuren 3A bis 3C dargestellten einfachen Gestaltungsformen sind auch weitaus komplexere und individuelle Konstruktionen möglich. Die konkrete Ausgestaltung ist an den jeweiligen Einsatzzweck der Vorrichtung anpassbar.

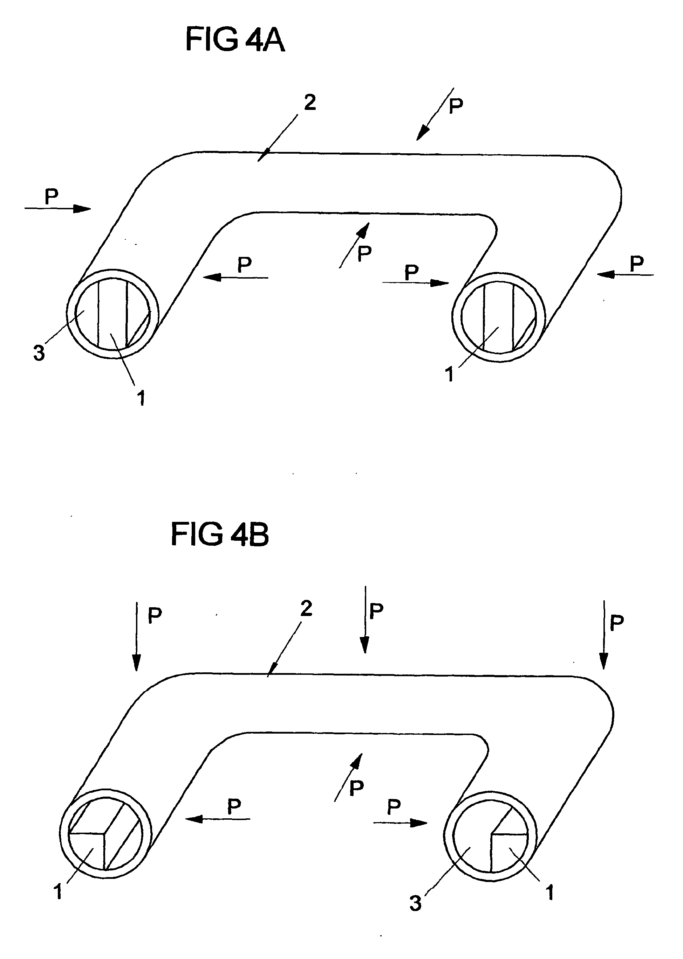

In den Figuren 4A und 4B sind Griffelemente in einer seitlichen Ansicht mit aufgeschnittenen Enden dargestellt. Die Querschnitte der Griffelemente der Figuren 4A und 4B entsprechen dabei den in den Figuren 3B und 3C dargestellten Querschnitten. Bei einem Einsatz dieser Griffelemente können die in den Figuren 4A und 4B geschnitten dargestellten Enden sowohl in offener als auch in geschlossener Weise ausgestaltet sein. Bei der in der Figur 4A dargestellten Ausführungsvariante würde bei einer entsprechenden Druckbelastung von innen und außen auch eine Druckentlastung nach innen und außen in Bezug auf das Griffelement erfolgen. Dies ist durch entsprechende mit P gekennzeichnete Pfeile verdeutlicht.

In der Figur 4B würde eine entsprechende Druckentlastung bei einer Benutzung nach innen und oben, das heißt bei einem entsprechenden Druck von der inneren Seite und der oberen Seite auf den Griff erfolgen. Auch hier sind zur Verdeutlichung wieder entsprechende mit P gekennzeichnete Pfeile eingezeichnet.

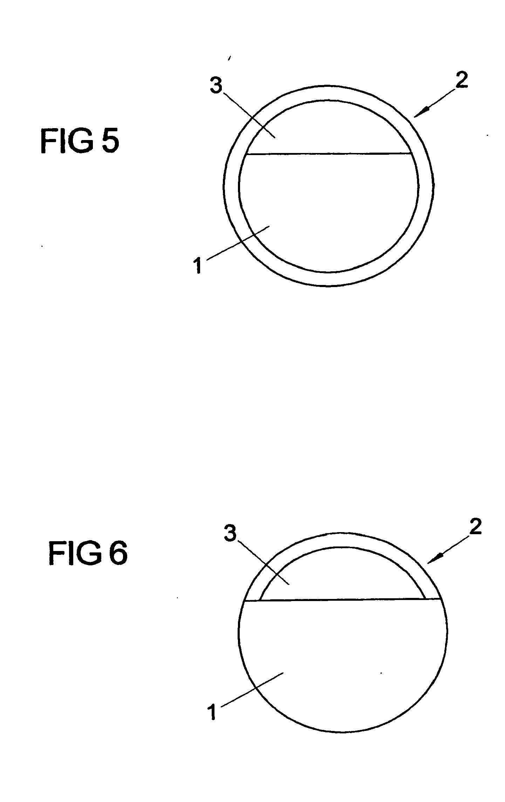

Die Figur 5 zeigt einen Querschnitt durch ein weiteres Ausführungsbeispiel einer entsprechenden Vorrichtung zur Ermöglichung eines gepolsterten Stehens, Sitzens oder Greifens. Dabei ist das Ausführungsbeispiel der Figur 5 - ähnlich zu denen der Figuren 3A bis 3C - als Rohr ausgestaltet. Das Ausführungsbeispiel der Figur 5 eignet sich als Sitzstange für Vögel. Hier ist ein Trägerelement 1 wieder vollständig von einem Auflageelement 2 umgeben. Das Trägerelement 1 nimmt dabei einen größeren Raum der gesamten Vorrichtung ein, als dies beim Trägerelement 1 im Ausführungsbeispiel der Figur 3A der Fall gewesen ist. Zwischen dem Auflageelement 2 und dem Trägerelement 1 ist wiederum ein Hohlraum 3 gebildet, der mit Gas gefüllt ist.

Die Figur 6 zeigt ein weiteres Ausführungsbeispiel einer als Sitzstange für Vögel geeigneten Vorrichtung. Hier umgibt das Auflageelement 2 das Trägerelement 1 nicht vollständig, sondern nur in Teilen. Das Auflageelement 2 ist dabei bündig mit dem Trägerelement 1 verbunden, so dass sich insgesamt eine im Querschnitt kreisförmige Außenkontur der Vorrichtung ergibt, so dass sie einem klassischen Rohr ähnelt. Durch das an der Oberseite des Trägerelementes 1 angebrachte Auflageelement 2 ergibt sich jedoch ein höherer Sitzkomfort für beispielsweise Legehennen, die auf der entsprechenden Vorrichtung sitzen. Denn durch die federnden Eigenschaften des Auflageelementes 2 in Verbindung mit dem Hohlraum 3 wird eine viel bessere Druckentlastung als bei einem durchgehenden bzw. kompakten Rohr erreicht.

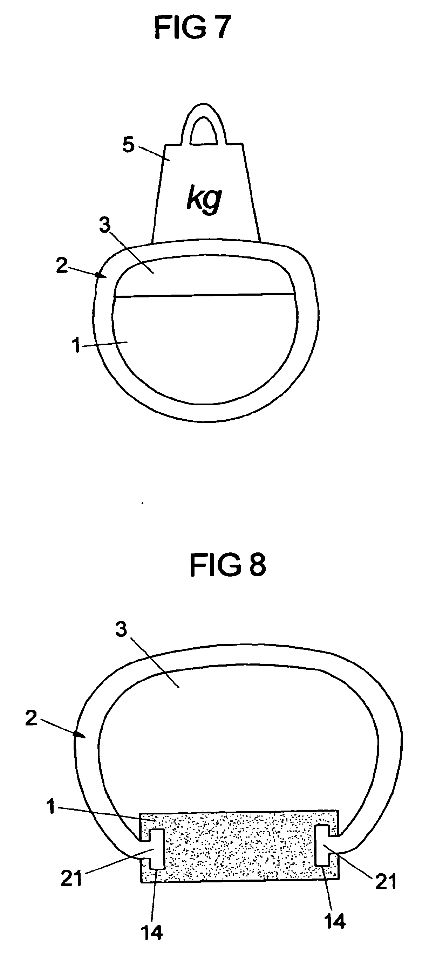

Die Figur 7 zeigt in einer Querschnittsdarstellung, wie sich das Ausführungsbeispiel der Figur 5 bei einer Druckbelastung von oben verhält. Wird durch eine Masse 5 Druck auf die Oberseite des Auflageelementes 2 ausgeübt, kommt es zur elastischen Verformung des Auflageelementes 2. Eine derartige Verformung ist möglich, da das im Hohlraum 3 enthaltene Gas komprimiert werden kann. Das Trägerelement 1 selbst verformt sich im Wesentlichen nicht. Das Auflageelement 2 passt sich jedoch der Druckfläche und des Gewichts der aufgebrachten Masse 5 an. Durch dieses Nachgeben bzw. diese Druckentlastung wird ein höherer Sitzkomfort erreicht. Das Nachgeben führt dazu, dass aus auf das Auflageelement 2 einwirkende Punktlasten gleichmäßig belastete Fläche werden.

Die Figur 8 zeigt einen Querschnitt durch ein weiteres Ausführungsbeispiel einer entsprechenden Vorrichtung. Bei dieser Vorrichtung ist das Auflageelement 2 in demontierbarer Weise mit dem Trägerelement 1 verbunden. So kann das Auflageelement 2 mit entsprechend geformten Endstücken 21 in Nuten 14 eingeführt werden, die im Trägerelement 1 gebildet sind. Nach dem Einschieben der Endstücke 21 in die Nuten 14 umgibt das Auflageelement das Trägerelement zumindest teilweise unter Ausbildung eines Hohlraums 3 zwischen dem Auflageelement 2 und dem Trägerelement 1. Das heißt, die Vorrichtung unterscheidet sich von den zuvor erläuterten Vorrichtung nur durch die Verbindung zwischen Auflageelement 2 und Trägerelement 1, nicht jedoch in ihrem generellen Aufbau.

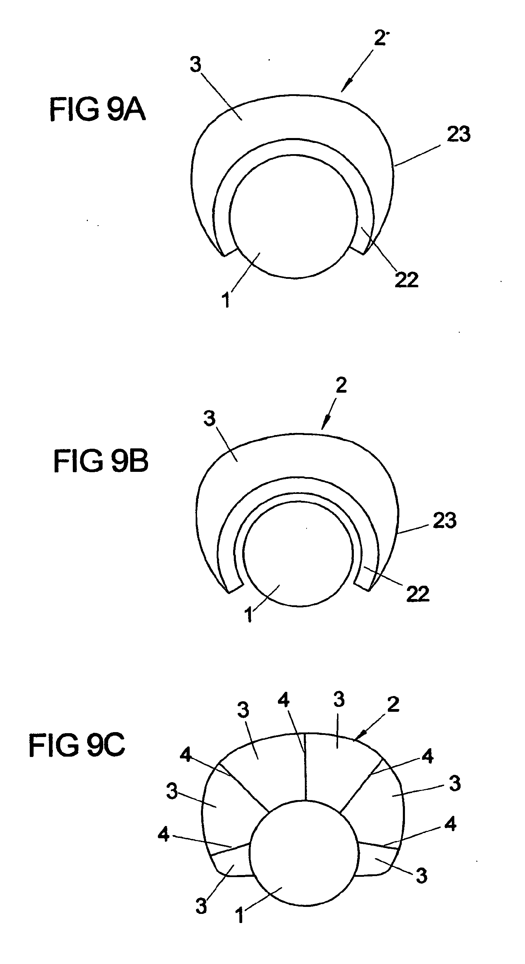

Die Figur 9A zeigt einen Querschnitt durch ein weiteres Ausführungsbeispiel einer entsprechenden Vorrichtung. Um ein Trägerelement 1 ist wiederum ein Auflageelement 2 angeordnet. Das Auflageelement 2 weist dabei jedoch an seiner dem Trägerelement 1 zugewandten Seite 22 eine größere Festigkeit auf als an seiner dem Trägerelement 1 abgewandten Seite 23. Diese unterschiedlichen Festigkeitsgrade können beispielsweise durch unterschiedliche Materialien oder durch unterschiedliche Wandstärken des gleichen Materials erreicht werden. Durch die unterschiedlichen Festigkeiten der Seiten 22 und 23 ist es möglich, das Auflageelement 2 leichter bzw. besser mit dem Trägerelement 1 zu verbinden.

Eine derartige leichtere bzw. bessere Verbindung ist insbesondere dann von Vorteil, wenn das Auflageelement 2, wie in der Figur 9B dargestellt, in vom Trägerelement 1 abnehmbarer Weise ausgestaltet ist. Denn dann kann durch eine festere Ausgestaltung der dem Trägerelement 1 zugewandten Seite 22 des Auflageelements 2 im Vergleich zu der dem Trägerelement 1 abgewandten Seite 23 eine leichtere Montage des Auflageelementes 2 am Trägerelement 1 erreicht werden. Diese Montage kann beispielsweise durch Klebestreifen, welche auf der festeren Seite 22 des Auflageelementes 2 bereits vorhanden sind, erreicht werden. Es muss dann nur noch eine Schutzfolie auf den entsprechenden Klebestreifen abgezogen werden, um das Auflageelement 2 mit dem Trägerelement 1 zu verbinden.

Die Ausführungsformen der Figuren 9A und 9B unterscheiden sich voneinander nur dadurch, dass das Auflageelement 2 in der Figur 9B vom Trägerelement 1 abgenommen dargestellt ist. Wird das Auflageelement 2 des Ausführungsbeispiels der Figur 9B auf das Trägerelement 1 aufgebracht, ergibt sich das Ausführungsbeispiel der Figur 9A. Die Darstellung des Ausführungsbeispiels der Figur 9A trifft jedoch auch auf solche Fälle zu, in denen das Auflageelement 2 nicht abnehmbar ausgestaltet ist, sondern dauerhaft mit dem Trägerelement 1 verbunden ist, beispielsweise durch einstückige Fertigung.

Die Ausführungsbeispiele der Figuren 9A und 9B können auch ohne separates Trägerelement 1 verwendet werden. In diesem Fall würde die festere Seite 22 als Trägerelement 1 fungieren, wobei der restliche Bereich des Auflageelements 2 diese festere Seite 22 auf der dem Hohlraum 3 zugewandten Seite umgibt. Die Festigkeit der festeren Seite 22 kann dabei so eingestellt werden, dass sie für ein Trägerelement günstige Eigenschaften aufweist.

Die Figur 9C zeigt schließlich den Querschnitt durch eine weitere Vorrichtung, bei der das Trägerelement 1 wie auch bei den in den Figuren 9A und 9B dargestellten Ausführungsbeispielen als Rohr ausgebildet ist. Das Auflageelement 2 weist jedoch auf seiner zum Trägerelement 1 hinweisenden Seite Stabilisatorelemente 4 auf, zwischen denen mehrere Hohlräume 3 gebildet sind. Jeder dieser Hohlräume ist mit Gas gefüllt. Die Stabilisatorelemente 4 dienen zur Stabilisierung des Auflageelementes. Wenn Stabilisatorelemente 4 vorgesehen sind, kann die äußere Wandstärke des Auflageelementes 2 bei Bedarf geringer ausgestaltet werden, da auch in diesem Fall mittels der Stabilisatorelemente 4 noch eine gute Stabilität der gesamten Vorrichtung erreicht wird.

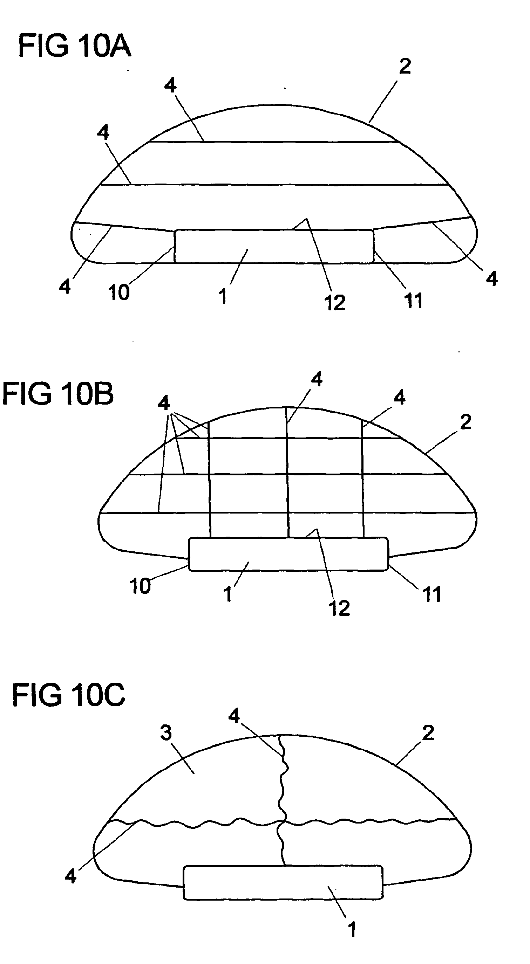

Sowohl die Anzahl der Stabilisatorelemente 4 als auch deren Orientierung kann den jeweiligen Anforderungen angepasst werden und unterliegt keiner Beschränkung. Dies ist in den Figuren 10A und 10B dargestellt. Wiederum umgibt ein Auflageelement 2 ein Trägerelement 1. In der Figur 10A wird das Trägerelement 1 dabei sowohl an seinen beiden Seiten 10, 11 als auch an seiner Oberseite 12 von dem Auflageelement umgeben. In der Figur 10B werden nur Teile der Seiten 10, 11 des Trägerelementes von dem Auflageelement 2 umgeben. Die obere Seite des Trägerelementes 1 ist jedoch auch im Ausführungsbeispiel der Figur 10B von dem Auflageelement umgeben. Wie aus der Figur 10A ersichtlich, können die Stabilisatorelemente 4 entweder nur bestimmte Bereiche des Auflageelementes 2 miteinander verbinden, oder aber Bereiche des Auflageelementes 2 mit dem Trägerelement 1. Wie aus der Figur 10B ersichtlich ist, können sich die Stabilisatorelemente 4 dabei überkreuzen und sowohl in vertikaler als auch in horizontaler Richtung verlaufen. Ein beliebiger diagonaler Verlauf ist ebenfalls möglich.

Das Trägerelement 1 ist in den Figuren 10A und b ebenso wie in der Figur 10C mit einem rechteckigen Querschnitt dargestellt. Dies dient der Illustration, dass auch hinsichtlich des Trägerelementes 1 beliebige Gestaltungsformen möglich sind und sich daher die unterschiedlichsten Anwendungsmöglichkeiten der vorliegenden Vorrichtung ergeben bzw. bewerkstelligen lassen.

In der Figur 10C sind zwischen dem Auflageelement 2 und dem Trägerelement 1 bzw. zwischen verschiedenen Bereichen des Auflageelementes 2 wiederum Stabilisatorelemente 4 angeordnet. Diese Stabilisatorelemente sind jedoch im Unterschied zu den vorstehend erläuterten Ausführungsbeispielen in federnder Art und Weise ausgestaltet. Das heißt, durch die Stabilisatorelemente 4 wird auf diese Weise eine zusätzliche Federwirkung des Auflageelementes 2 gegenüber dem Trägerelement 1 erreicht.

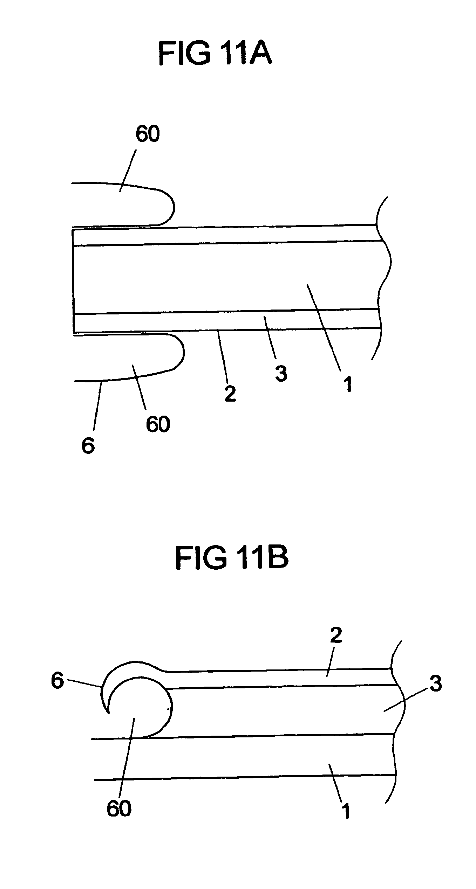

Die Figur 11A zeigt einen Längsschnitt durch ein weiteres Ausführungsbeispiel einer entsprechenden Vorrichtung in einer Ansicht von oben. Dabei ist ein Trägerelement 1 wiederum als Rohr ausgestaltet und von einem Auflageelement 2 unter Ausbildung eines Hohlraums 3 zwischen Auflageelement 2 und Trägerelement 1 an seinen seitlichen und seiner oberen Seite umgeben. An den seitlichen Enden des Auflageelements 2, von denen in der Figur 11A nur eines (nämlich das linke) dargestellt ist, ist jeweils ein Abschlusselement 6 vorgesehen. Dieses Abschlusselement 6 weist eine im Längsschnitt U-förmige Gestalt auf und umgibt das Auflageelement 2 vollständig kreisförmig, so dass sich eine nach außen (in der Figur 11A links dargestellt) geöffnete rinnenartige bzw. kranzartige Struktur ergibt. Mit anderen Worten ausgedrückt: Am Ende der Vorrichtung befindet sich ein kranzförmiges Abschlusselement 6, das in Längserstreckungsrichtung des Trägerelementes 1 weisende Vertiefungen 60 aufweist.

Wenn nun Schädlinge, wie zum Beispiel Milben, Flöhe oder Wanzen, versuchen, auf die in der Figur 11A dargestellte Vorrichtung von der Seite zu krabbeln, gelangen sie zunächst in die Vertiefungen 60 des Abschlusselementes 6. Aus diesen Vertiefungen 60 kommen die Schädlinge nicht mehr ohne weiteres heraus, jedenfalls nicht in Richtung der eigentlichen Vorrichtung. Dies ist insbesondere dann von Vorteil, wenn die Vorrichtung eine Sitzstange für Vögel ist. Denn auf diese Weise kann mit verhältnismäßig einfachen Mitteln (nämlich durch das Anbringen eines Abschlusselementes 6) verhindert werden, dass Schädlinge auf die Sitzstange kommen. Selbst wenn auf diese Weise nicht ein vollständiges Fernbleiben von Schädlingen von der Sitzstange erreicht werden kann, so ist es zumindest möglich, dass weniger Medikamente zur Behandlung der auf der Sitzstange sitzenden Vögel notwendig werden und insgesamt eine bessere Gesundheit und Hygiene für die die Sitzstange benutzenden Vögel erreicht wird.

Die Figur 11B zeigt einen Längsschnitt durch eine weitere mögliche Ausgestaltung einer Vorrichtung mit einem Abschlusselement 6 an dem Auflageelement 2 in einer seitlichen Ansicht. In diesem Fall ist das Abschlusselement 6 in Form eines nach außen offenen C geformt und weist einen hakenförmig ausgebildeten Öffnungsbereich auf. Das Abschlusselement 6 ist dabei ein integraler Bestandteil des Auflageelements 2 und kein separates Bauteil. Die Funktionsweise ist im Wesentlichen identisch zu der vorstehend im Zusammenhang mit der Figur 11A erläuterten. Von der Seite auf die Vorrichtung zukommende Schädlinge gelangen nur in die kranzförmige Vertiefung 60, nicht jedoch auf das Auflageelement 2 selbst und werden auf diese Weise von Vögeln forngehalter.

Durch eine im Rahmen der vorliegenden Erfindung liegende Kombination aller vorstehend erläuterten Ausführungsbeispiele sind zahlreiche Gestaltungsmöglichkeiten einer entsprechenden Vorrichtung zur Ermöglichung eines gepolsterten Stehens, Sitzens oder Greifens möglich, die den jeweiligen Anforderungen und dem jeweiligen Einsatzzweck in optimaler Weise angepasst werden können.

## Patentansprüche

1. Verwendung einer Vorrichtung zur Ermöglichung eines gepolsterten Stehens, Sitzens oder Greifens, mit einem Trägerelement (1) und einem an dem Trägerelement (1) angeordneten Auflageelement (2), das das Trägerelement (1) zumindest teilweise umgibt, wobei das Auflageelement (2) dazu vorgesehen und eingerichtet ist, sich durch eine Druckeinwirkung (P) eines Anwenders (5) auf eine Oberfläche des Auflageelements (2) elastisch zu verformen, wobei zwischen dem Trägerelement (1) und dem Auflageelement (2) mindestens ein Hohlraum (3) gebildet ist, der mit einem Gas gefüllt ist, als Sitzstange für Vögel.

2. Verwendung nach Anspruch 1, **dadurch gekennzeichnet, dass** das Auflageelement (2) in von dem Trägerelement (1) abnehmbarer Weise ausgestaltet ist.

3. Verwendung nach Anspruch 1 oder 2, **dadurch gekennzeichnet, dass** das Auflageelement (2) mindestens 50 % der Oberfläche des Trägerelements (1) überdeckt.

4. Verwendung nach einem der vorhergehenden Ansprüche, **dadurch gekennzeichnet, dass** das Auflageelement (2) die obere (12) und die seitlichen Oberflächen (10, 11) des Trägerelements (1) vollständig überdeckt.

5. Verwendung nach einem der vorhergehenden Ansprüche, **dadurch gekennzeichnet, dass** das Trägerelement (1) und/oder das Auflageelement (2) aus einem Kunststoff hergestellt sind.

6. Verwendung nach einem der vorhergehenden Ansprüche, **dadurch gekennzeichnet, dass** das Trägerelement (1) und/oder das Auflageelement (2) aus einem Material hergestellt sind, das einen Elastizitätsmodul, bestimmt gemäß DIN 53457, von ≤ 1 GPa, insbesondere ≤ 0,1 GPa und ganz besonders ≤ 0,01 GPa aufweist.

7. Verwendung nach einem der vorhergehenden Ansprüche, **dadurch gekennzeichnet, dass** das Auflageelement (2) wenigstens ein Stabilisatorelement (4) aufweist, das sich auf einer dem Trägerelement (1) zugewandten Seite des Auflageelementes (2) erstreckt.

8. Verwendung nach Anspruch 7, **dadurch gekennzeichnet, dass** das Stabilisatorelement (4) federnd ausgestaltet ist und/oder einen Druck oder einen Zug auf einen solchen Bereich des Auflageelements (2) ausüben kann, mit dem es fest verbunden ist.

9. Verwendung nach einem der vorhergehenden Ansprüche, **dadurch gekennzeichnet, dass** das Trägerelement (1) und/oder das Auflageelement (2) zumindest teilweise antimikrobielle Eigenschaften aufweisen.

10. Verwendung nach einem der vorhergehenden Ansprüche, **dadurch gekennzeichnet, dass** das Trägerelement (1) und/oder das Auflageelement (2) zumindest teilweise mit einer schmutzabweisenden und/oder feuchtigkeitsabweisenden Beschichtung versehen sind und/oder zumindest teilweise Geruchsstoffe aufweisen.

11. Verwendung nach einem der vorhergehenden Ansprüche, **dadurch gekennzeichnet, dass** das Trägerelement (1) und das Auflageelement (2) eine längserstreckte Form aufweisen und das Auflageelement (2) zumindest an einem seiner beiden in Längserstreckungsrichtung einander gegenüberliegenden Enden ein U-förmiges Abschlusselement (6) aufweist, das dazu vorgesehen und eingerichtet sind, den Kontakt von Schädlingen mit dem Auflageelement außerhalb des Abschlusselements zu verhindern.

12. Verwendung nach einem der vorhergehenden Ansprüche, **dadurch gekennzeichnet, dass** das Auflageelement (2) an einem dem Trägerelement (1) zugewandten Abschnitt eine größere Festigkeit aufweist als auf einem dem Trägerelement (1) abgewandten Abschnitt.

13. Verwendung nach einem der vorhergehenden Ansprüche, **dadurch gekennzeichnet, dass** die Vorrichtung mindestens ein Kopplungselement aufweist, das dazu vorgesehen und eingerichtet ist, die Vorrichtung mit einer weiteren im Wesentlichen gleich gestalteten Vorrichtung verbinden zu können.

## Claims

1. Use of a device for allowing cushioned standing, sitting or gripping, having a support element (1) and a bearing element (2) arranged on the support element (1), said bearing element (2) at least partially surrounding the support element (1), wherein the bearing element (2) is provided and designed to deform elastically under application of pressure (P) by a user (5) on a surface of the bearing element (2), wherein at least one cavity (3) is formed between the support element (1) and the bearing element (2), said cavity being filled with gas, as a perch for birds.

2. Use according to Claim 1, **characterized in that** the bearing element (2) is embodied so as to be removable from the support element (1).

3. Use according to Claim 1 or 2, **characterized in that** the bearing element (2) covers at least 50% of the surface of the support element (1).

4. Use according to one of the preceding claims, **characterized in that** the bearing element (2) completely covers the top (12) and the lateral surfaces (10 , 11) of the support element (1) .

5. Use according to one of the preceding claims, **characterized in that** the support element (1) and/or the bearing element (2) are produced from a plastics material.

6. Use according to one of the preceding claims, **characterized in that** the support element (1) and/or the bearing element (2) are produced from a material which has a modulus of elasticity, determined according to DIN 53457, of ≤ 1 GPa, in particular ≤ 0.1 GPa and very particularly ≤ 0.01 GPa.

7. Use according to one of the preceding claims, **characterized in that** the bearing element (2) has at least one stabilizer element (4) which extends on a side, facing the support element (1), of the bearing element (2).

8. Use according to Claim 7, **characterized in that** the stabilizer element (4) is configured in a resilient manner and/or can exert a push or a pull on such a region of the bearing element (2) to which it is firmly connected.

9. Use according to one of the preceding claims, **characterized in that** the support element (1) and/or the bearing element (2) at least partially have antimicrobial properties.

10. Use according to one of the preceding claims, **characterized in that** the support element (1) and/or the bearing element (2) are provided at least partially with a dirt-repellent and/or moisture-repellent coating and/or at least partially include odorants.

11. Use according to one of the preceding claims, **characterized in that** the support element (1) and the bearing element (2) have an elongate shape and the bearing element (2) has a U-shaped terminating element (6) at least at one of its two ends that are opposite one another in the direction of longitudinal extent, said terminating element (6) being provided and designed to prevent pests coming into contact with the bearing element away from the terminating element.

12. Use according to one of the preceding claims, **characterized in that** the bearing element (2) has a greater strength in a portion facing the support element (1) than in a portion facing away from the support element (1).

13. Use according to one of the preceding claims, **characterized in that** the device has at least one coupling element which is provided and designed to be able to connect the device to a further device configured in a substantially identical manner.

## Revendications

1. Utilisation d'un dispositif permettant la station debout, la position assise ou la saisie amorties, avec un élément de support (1) et un élément d'appui (2) disposé sur l'élément de support (1), qui enveloppe au moins partiellement l'élément de support (1), dans laquelle l'élément d'appui (2) est prévu et conçu pour se déformer élastiquement sous l'action de la pression (P) d'un utilisateur (5) sur une surface de l'élément d'appui (2), dans laquelle au moins un espace creux (3), qui est rempli d'un gaz, est formé entre l'élément de support (1) et l'élément d'appui (2), comme perchoir pour des oiseaux.

2. Utilisation selon la revendication 1, **caractérisée en ce que** l'élément d'appui (2) est équipé d'une façon amovible de l'élément de support (1).

3. Utilisation selon la revendication 1 ou 2, **caractérisée en ce que** l'élément d'appui (2) recouvre au moins 50 % de la surface de l'élément de support (1) .

4. Utilisation selon l'une quelconque des revendications précédentes, **caractérisée en ce que** l'élément d'appui (2) recouvre entièrement la surface supérieure (12) et les surfaces latérales (10, 11) de l'élément de support (1).

5. Utilisation selon l'une quelconque des revendications précédentes, **caractérisée en ce que** l'élément de support (1) et/ou l'élément d'appui (2) sont fabriqués en une matière plastique.

6. Utilisation selon l'une quelconque des revendications précédentes, **caractérisée en ce que** l'élément de support (1) et/ou l'élément d'appui (2) sont fabriqués en un matériau, qui présente un module d'élasticité, déterminé selon DIN 53457, de ≤ 1 GPa, en particulier de ≤ 0,1 GPa et tout particulièrement de ≤ 0,01 GPa.

7. Utilisation selon l'une quelconque des revendications précédentes, **caractérisée en ce que** l'élément d'appui (2) présente au moins un élément stabilisateur (4), qui s'étend sur un côté de l'élément d'appui (2) tourné vers l'élément de support (1).

8. Utilisation selon la revendication 7, **caractérisée en ce que** l'élément stabilisateur (4) est de nature élastique et/ou peut exercer une pression ou une traction sur une zone de l'élément d'appui (2) à laquelle il est attaché de façon fixe.

9. Utilisation selon l'une quelconque des revendications précédentes, **caractérisée en ce que** l'élément de support (1) et/ou l'élément d'appui (2) présentent au moins partiellement des propriétés antimicrobiennes.

10. Utilisation selon l'une quelconque des revendications précédentes, **caractérisée en ce que** l'élément de support (1) et/ou l'élément d'appui (2) sont munis au moins partiellement d'un revêtement résistant aux salissures et/ou résistant à l'humidité et/ou présentent au moins partiellement des substances odorantes.

11. Utilisation selon l'une quelconque des revendications précédentes, **caractérisée en ce que** l'élément de support (1) et l'élément d'appui (2) présentent une forme allongée et l'élément d'appui (2) présente, au moins à une de ses deux extrémités opposées l'une à l'autre dans la direction d'extension longitudinale, un élément de fermeture en forme de U (6), qui est prévu et conçu pour empêcher le contact de parasites avec l'élément d'appui en dehors de l'élément de fermeture.

12. Utilisation selon l'une quelconque des revendications précédentes, **caractérisée en ce que** l'élément d'appui (2) présente, sur une partie tournée vers l'élément de support (1), une résistance plus élevée que sur une partie détournée de l'élément de support (1).

13. Utilisation selon l'une quelconque des revendications précédentes, **caractérisée en ce que** le dispositif présente au moins un élément de couplage, qui est prévu et conçu pour pouvoir assembler le dispositif à un autre dispositif de configuration essentiellement identique.
